# DEMANDE DE BREVET EUROPEEN

(11) **EP 1 775 170 A2**
(43) Date de publication de la demande: **18.04.2007**
(21) Numéro de dépôt: 06122297.2
(22) Date de dépôt: 13.10.2006
(51) Int. Cl.: B60R 13/08

(54) **Produit à base de mat thermoplastique, son procédé de fabrication et applications de ce produit**

(30) Priorité: 17.10.2005 FR 0510552
(71) Demandeur: Apollor Union, 54300 Moncel les Luneville (FR)
(72) Inventeur: Dupuis, David Novagraaf Techn. - Cabinet Ballot, 57070 Metz (FR); Prevost, Eric Novagraaf Techn. - Cabinet Ballot, 57070 Metz (FR)
(74) Mandataire: Brungard, Yves Francois

(57) **Abrégé**

Le produit plat à base de mat de non-tissé de fibres et de matière synthétique thermoplastique, est obtenu à la suite notamment d'une thermo-compression du mat, réalisée seulement localement dans un moule comportant des zones en retrait où le mat n'est pas compressé, de manière à former un produit dense dans les zones (12) soumises à ladite compression et à laisser subsister entre celles-ci des zones (11) peu denses, non compressées. Application à la réalisation de pièces et objets d'ameublement, de panneaux de voitures, etc.

## Description

La présente invention concerne un nouveau produit à base de mat de non-tissé thermoplastique, son procédé de fabrication et les applications de ce produit. Par « produit à base de mat de non-tissé thermoplastique » il doit être compris tout produit comportant notamment une ou des partie(s) rigide(s) ou semi rigide(s), obtenu par la mise en oeuvre d'un mat de non-tissé de fibres thermoplastique ou de composite formé de fibres, naturelles ou non, associées à un thermoplastique. La mise en oeuvre d'un tel mat de fibres thermoplastique, ou de fibres, naturelles ou non, associées à ou revêtues de thermoplastique, implique de manière connue une compression à chaud visant à agglomérer les fibres dans une structure compacte et relativement dense, généralement d'épaisseur relativement faible, telle qu'une feuille ou plaque, dont la mise en forme est effectuée lors de ladite compression ou d'une compression ultérieure.

On connaît déjà des produits et des procédés de fabrications du type indiqué ci-dessus, par exemple par le document FR-A-2774020, qui décrit notamment un produit monocouche à base de fibres végétales et de matière thermoplastique synthétique, utilisé notamment pour la fabrication de pièces de véhicules automobiles. Ce produit est obtenu à partir d'un mat fibreux et aiguilleté, constitué de fibres végétales préalablement traitées chimiquement et de matière synthétique thermoplastique, qui peut se présenter également sous forme de fibres, les fibres et la matière synthétique étant mélangées et réparties de manière uniforme, de sorte que la répartition des fibres est sensiblement la même dans toute l'épaisseur du produit. Le mélange est ensuite thermoformé, de manière connue.

Typiquement, le matériau non-tissé, dont le grammage est compris entre 1600 g/m² et 3500 g/m², est transformé en deux opérations successives : la première consiste en une légère compression à chaud, entre les deux parois d'un moule, ou entre deux panneaux chauffants munis de résistance électriques de chauffage, à une température de 160°C à 220°C sous une pression inférieure ou égale à 8 bars. Le chauffage du mat est obtenu par le contact uniforme de sa surface avec la paroi chauffée du moule, et la durée de chauffage est déterminée pour être suffisante pour fondre les fibres synthétiques thermoplastiques. Puis la deuxième étape consiste à former le produit final par compression à froid, à environ 20°C, sous une pression de 5 à 20 bars dans un moule de géométrie correspondant à la pièce désirée, telle que par exemple une planche de bord d'automobile, des tablettes, encadrements de fenêtres, etc. Les articles ainsi obtenus sont ensuite transformés, découpés ou poinçonnés suivant les techniques classiques utilisées dans l'industrie.

Les produits obtenus peuvent être associés à des couches de matériau complémentaires pour obtenir des structures à plusieurs couches décoratives ou fonctionnelles, par exemple des couches d'isolation thermique ou phonique, en mousse de polyuréthane, polyoléfine ou polychlorure de vinyle, ce type de produit multicouches étant destiné par exemple à constituer des panneaux de portes pour l'industrie automobile.

On connaît aussi, par les documents US2003/091806 et US 2003/008581, des produits fibreux en forme générale de plaque plane, destinés notamment à former des panneaux isolants de voiture, et comportant au moins une face qui est thermo-compressée seulement sur une épaisseur réduite de manière à laisser dans la majeure partie de l'épaisseur de la plaque de la matière fibreuse non compressée. La face compressée est ainsi rendue étanche, et l'épaisseur non compressée garde ses capacités d'isolation. Pour permettre de fixer ces panneaux, leurs bords sont fortement compressés pour réduire leur épaisseur et pouvoir être appliqués et fixés sur un cadre métallique de porte par exemple. Mais outre ces parties périphériques, l'ensemble du panneau est d'épaisseur constante, et présente sur toute sa surface des caractéristiques sensiblement homogènes, avec notamment au moins une peau surfacique continue rigide et étanche.

D'autres produits similaires à base de mat de fibres et matière thermoplastique sont aussi connus, utilisant des fibres non végétales. Mais tous ces produits, du fait de leur procédé de fabrication par thermo-compression, se présente sous forme de produits plans ou de panneaux ou plaques préformées mais restant de forme générale sensiblement plane, apte à permettre la dite compression. Le produit obtenu ne peut par exemple être plié car il est cassant. Ses caractéristiques mécaniques sont sensiblement identiques dans toute sa surface. Pour assurer diverses fonctions, telles que par exemple d'une part une rigidité et un aspect de surface particulier, associés à des caractéristiques isolantes, les seules solutions connues actuellement sont soit les produits du type décrit ci-dessus présentant une densité variable dans l'épaisseur et notamment une face thermo-compressée rigide, soit l'utilisation de produits multicouches, qui permet de répondre à la demande mais, du fait de l'association nécessaire des différentes couches, entraîne des opérations de fabrication supplémentaires et donc un coût également plus élevé.

On connaît encore, notamment par JP2004113489, des produits fibreux réalisés à partir de feuilles dans lesquelles des emboutis notamment hémisphériques sont réalisés pour former des sortes de semi-bulles ou bossages destinés à accroître l'épaisseur globale du produit, dans le but d'obtenir finalement des produits volumineux, souple et compressible, doux et absorbants, utilisables par exemple pour de couches culottes ou autres produits d'hygiène similaires. Ce type de produit, dont par ailleurs la masse au m² est typiquement de l'ordre de 20 à 30 g/m², ne peut donc être utilisé pour former des objets, telles que les plaques ou feuilles rigides ou semi-rigides, ou autres produits tridimensionnels visés par l'invention, ayant au moins certaines parties rigides.

La présente invention a pour but de résoudre les problèmes évoqués ci-dessus, et vise en particulier à permettre la réalisation de pièces ou objets divers alliant sur la même pièce des caractéristiques mécaniques, notamment de rigidité, et/ou des caractéristiques thermiques différentes, en limitant le nombre d'étapes de fabrication, la variété de matières utilisées, le temps de fabrication, et donc en réduisant les coûts. Elle vise aussi à fournir un produit à base de mat de non-tissé thermoplastique, apte à former simplement des objets tridimensionnels, sans opérations complémentaires de collage, soudage ou toute autre technique classique d'assemblage.

Avec ces objectifs en vue, l'invention a pour objet un produit plat à base de mat de fibres et de matière synthétique thermoplastique, comportant une ou des parties rigides ou semi-rigides et constitué d'un mélange non-tissé et sensiblement homogène de fibres et de ladite matière synthétique thermoplastique, le produit étant obtenu à la suite notamment d'une thermo-compression dudit mélange.

Selon l'invention, le produit est caractérisé en ce qu'il présente sur sa surface des zones denses résultant de ladite compression et constituant la ou les dites parties rigides ou semi rigides, et des zones non compressées ou de compression moindre, constituant des zones de plus faible densité et/ou de plus grande souplesse et/ou de moindre dureté, situées entre les dites zones compressées denses.

Par « produit plat », il doit être entendu un produit essentiellement bidimensionnel, monocouche, tel qu'une feuille ou une plaque, ce qui n'exclut pas que le produit puisse avoir un certain galbe ou autres reliefs de relativement faible amplitude. Par rigide ou semi rigide, il doit être entendu que les parties considérées sont soit effectivement rigides, non déformables par rapport à l'application qui peut être faite ultérieurement du produit plat, soit susceptibles d'être déformées élastiquement, ou même plastiquement, mais en conservant globalement des caractéristiques de résistance mécanique et de rigidité.

Les zones moins denses, dont la forme, le nombre, la disposition et la répartition sont adaptés aux souhaits en fonction de l'utilisation finale envisagée pour le produit, constituent des zones ayant des caractéristiques mécaniques ou physico-chimiques différentes des caractéristiques comparables des zones compressées. Typiquement, les parties rigides ou semi rigides ont un module d'Young supérieur à 10 MPa, et les parties non compressées ou partiellement compressées un module d'Young inférieur à 1 MPa.

Le produit, d'un grammage typiquement compris entre 200 et 3500 g/m², comporte ainsi des zones de rigidités différentes, les zones non comprimées ou moins comprimées, où les fibres restent donc dans un état proche de celui du mat d'origine, étant moins rigides que les zones fondues ou au moins ramollies et comprimées, où les fibres sont étroitement liées et agglomérées. Typiquement, l'épaisseur des parties compressées est inférieure à la moitié de l'épaisseur des parties non compressées. Un produit de 1800 g/m² aura par exemple une épaisseur de 30 mm dans les zones non compressées et de 3 mm dans lez zones compressées.

L'invention a aussi pour objet un procédé d'obtention du produit défini ci-dessus qui se caractérise par le fait que la compression du mat est réalisée seulement localement, de manière à former un produit dense dans les zones soumises à ladite compression et à laisser subsister entre celles-ci des zones peu denses, non comprimées ni sensiblement chauffées.

Cette compression localisée, que l'on appellera compression partielle, permet d'adapter les caractéristiques des zones non totalement compressées à l'utilisation désirée. Ainsi on pourra obtenir:
- des zones brutes, ou molles, quasi non-transformées, ni chauffées ni compressées, dont la densité restera quasiment la même que celle du mat fibreux de base,
- des zones thermo-compressées denses et dures, et
- une ou plusieurs zones semi-rigides, ayant des caractéristiques de densité et de rigidité intermédiaires, obtenues par une compression moindre, ou même sans compression du tout mais avec un certain chauffage ayant quand même un effet d'agglomération des fibres, au moins en surface.

On notera aussi à ce sujet que le terme « compression partielle » utilisé ici vise bien à définir que la compression est effectuée seulement « sur une partie » de la surface,ou bien sûr sur plusieurs zones de la surface totale du produit globalement plat. En ce sens, le terme compression partielle utilisé ici ne signifie pas une compression qui ne serait que partielle dans l'épaisseur du produit, comme dans les documents documents US2003/091806 et US 2003/008581 cités dans la partie introductive de ce mémoire.

Cependant, selon une variante de réalisation, dans certaines zones, jouxtant des zones thermo-compressées denses et/ou des zones non compressées, le mat de non-tissé est localement chauffé seulement sur une de ses faces, pour faire fondre les fibres synthétiques situées du côté du chauffage, permettant ainsi d'obtenir des zones densifiées et rigides sur ladite face, les fibres situées dans cette zone sur l'autre face n'étant pas ou peu chauffées et non comprimées et subsistant en conséquence sous une forme peu dense, molle. On obtient ainsi un produit dont les caractéristiques varient dans l'épaisseur, d'une face rigide, pouvant présenter un aspect visuel prédéterminé pour constituer la face visible d'une pièce, à l'autre face restant « molle », amortissante, isolante, de fonctionnalités équivalentes aux articles multicouches selon l'art antérieur, produit qui se distingue particulièrement par le fait qu'il associe, en une seule pièce, de telles zones présentant des caractéristiques variables dans l'épaisseur avec des zones non compressées typiques de la présente invention.

L'invention a aussi pour objet un moule pour la mise en oeuvre du procédé ci-dessus et la réalisation des produits définis précédemment, ce moule étant caractérisé en ce qu'il comporte des parois opposées en vis-à-vis, pourvues de moyens de chauffage, et au moins une paroi comportant des zones dégagées ou en retrait, de manière que ces zones ne soient pas amenées à comprimer le mat de non-tissé,ou au moins à ne le comprimer que de manière limitée par rapport aux autres zones de ladite paroi. Des zones en retrait, ou même complètement dégagées, peuvent être ménagées sur une seule paroi du moule ou sur les deux parois, dans des parties se faisant faces ou décalées latéralement. Ces zones ne comporteront pas de moyen de chauffage. D'autres zones en retrait peuvent comporter des moyens de chauffage, ou simplement bénéficier du chauffage provenant de zones voisines, et ainsi assurer une fusion partielle des fibres situées en face de telles zones en retrait, mais sans assurer de compression. Les parois du moule sont aussi préférentiellement équipées de moyens de refroidissement, permettant d'accélérer le refroidissement d'ensemble du produit après la compression, et/ou d'éviter, par un refroidissement localisé, un chauffage dans des zones localisées pendant le chauffage et la compression d'autres zones. Les moyens de chauffage seront préférentiellement des résistances électriques, par exemple sous forme de cartouches chauffantes disposées dans l'épaisseur des parois du moule. Les moyens de refroidissement pourront notamment être réalisés sous forme de canaux aménagés dans les parois du moule, et dans lesquels on fera circuler selon besoins un fluide refroidissant

Le produit selon l'invention peut être utilisé notamment pour:
- la réalisation de pièces sensiblement planes et pourvues de zones en surépaisseur, où le mat de non-tissé reste brut ou seulement transformé en surface par un chauffage sans compression, de manière à former une sorte de coussinets, pouvant jouer un rôle amortissant, ou insonorisant ou isolant, etc.
- la réalisation de pièces tridimensionnelles comportant des zones rigides reliées par un pli, les zones rigides étant les zones qui ont été soumises au chauffage et à la compression et le pli étant obtenu dans des zones linéaires non soumise à chauffage et compression, et gardant en conséquence leurs capacités de déformation.
- la réalisation d'objet présentant des caractéristiques physiques et mécaniques variables dans leur épaisseur.

D'autres caractéristiques et avantages apparaîtront dans la description qui va être faite de plusieurs exemples de produits conformes à l'invention et d'objets utilisant lesdits produits, ainsi que du procédé et du moule d'obtention dudit produit.

On se reportera aux dessins annexés dans lesquels:
- la figure 1 est une vue en perspective d'un élément de produit conforme à l'invention,
- la figure 2 est une vue en perspective d'un autre élément de produit selon l'invention, après découpage,
- les figures 3 à 6 illustrent le principe du procédé selon l'invention, pour la réalisation de zones classiquement thermo-compressées (figure 3), pour la réalisation de zones restant brutes ou molles (figure 4), de zones semi-rigides, transformées seulement en surface par chauffage (figure 5), et de zones à propriétés variables dans l'épaisseur (figure 6),
- la figure 7 illustre en perspective la réalisation d'une pièce comportant une zone au moins partiellement non-transformée s'étendant en longueur, et la figure 8 illustre l'utilisation de cette pièce pour former un élément d'angle par pliage,
- les figures 9 à 15 illustrent un exemple d'application de l'invention pour la réalisation d'un siège, représenté terminé figure 12. Parmi ces vues :

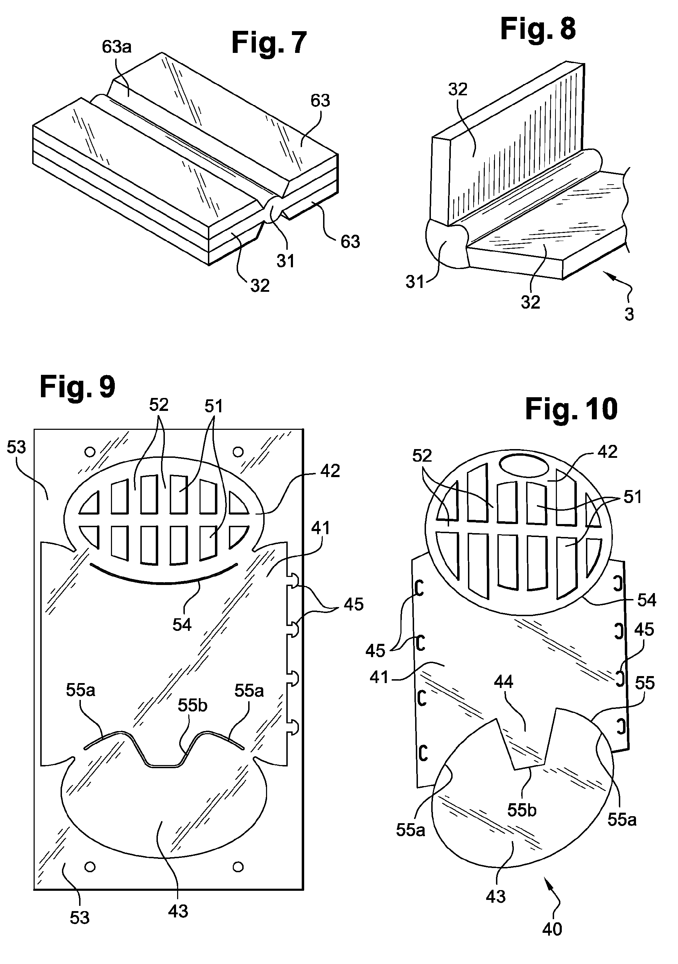

   - la figure 9 est une vue en plan d'une pièce constituant le siège et obtenue selon l'invention, à la sortie du moule,
   - la figure 10 représente, en perspective, la même pièce après détourage,

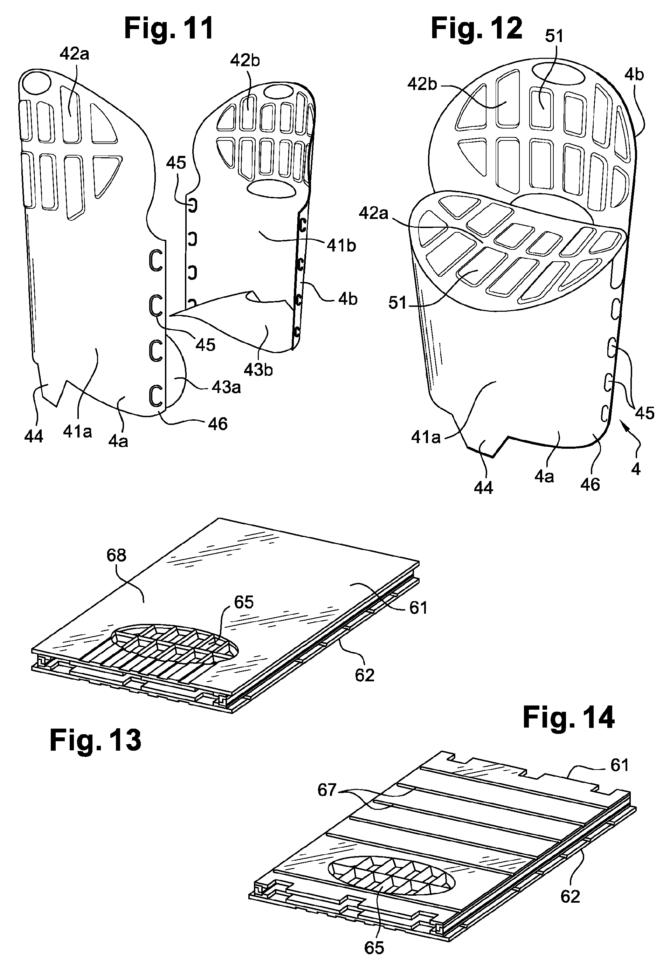

   - la figure 11 illustre une phase d'assemblage de deux des dites pièces pour former le siège de la figure 11,
   - la figure 13 est une représentation schématique du moule, vu de l'extérieur
   - la figure 14 est une représentation schématique du moule, sans sa plaque de fermeture supérieure, et montrant les moyens de chauffage et de refroidissement,

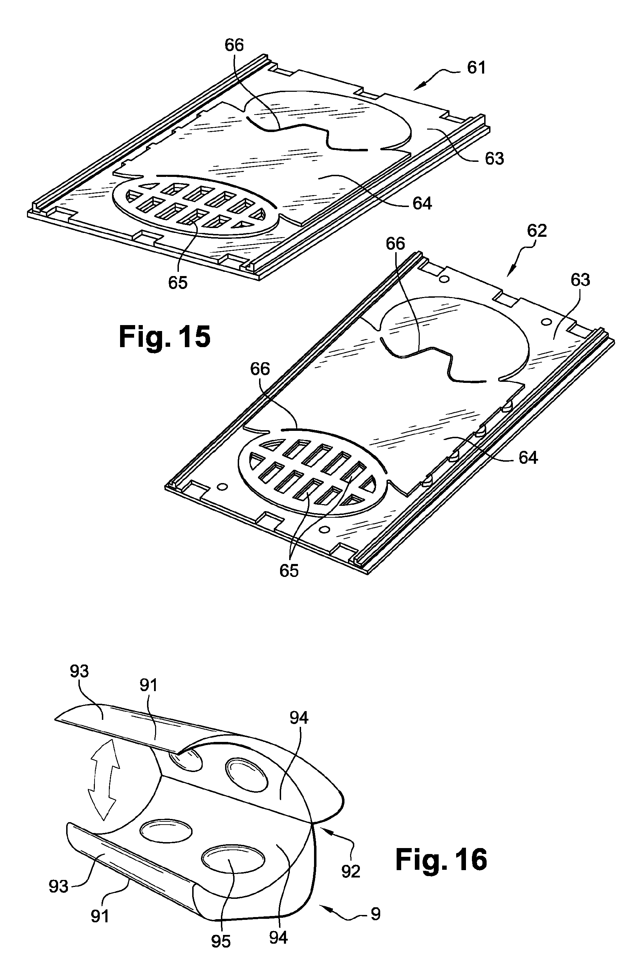

   - la figure 15 montre les faces intérieures des deux parois du moule, la paroi supérieure étant retournée,
- la figure 16 illustre encore un autre exemple d'application d'un produit selon l'invention, constitué par un coffret d'emballage protecteur.

Les non-tissés transformés selon la présente invention sont des produits ou articles monocouches d'une densité moyenne supérieure ou égale à 0,7. Ces non-tissés sont obtenus à partir d'un mat fibreux et aiguilleté de fibres synthétiques thermoplastiques, par exemple en polyamide ou polypropylène, ou d'un mélange de fibres constituées en général majoritairement en poids de fibres synthétiques thermoplastiques et minoritairement de fibres naturelles, telles que par exemple des fibres de lin, chanvre, sisal, etc. La proportion peut toutefois varier et notamment atteindre un rapport de 1/1 ou même plus entre les fibres naturelles et les fibres synthétiques. Les fibres synthétiques thermoplastiques ont typiquement une longueur supérieure ou égale à 30 mm et une finesse comprise entre 0,15 et 1,7 tex.

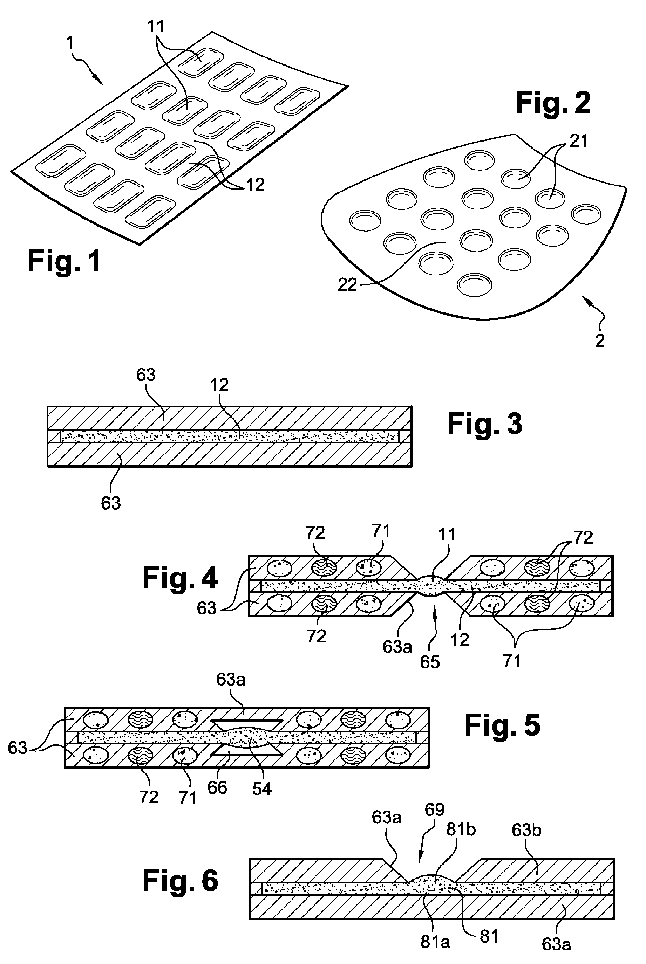

Les figures 1 et 2 montrent deux exemples de produits conformes à l'invention. Le produit de la figure 1 se présente sous forme d'une plaque 1 rigide comportant des coussinets 11 de forme rectangulaire séparés par des bandes 12 de plus faible épaisseur, résultant du chauffage et de la compression localisée effectuée dans ces zones. Ces bandes 12 confèrent au produit sa rigidité, alors que les coussinets 11 ne sont que peu ou pas compressées par rapport au mat d'origine, mais présentent cependant une surface sensiblement lisse obtenue par une fusion superficielle des fibres synthétiques. Le produit de la figure 2 se présente aussi sous forme d'une plaque 2 présentant des coussinets 21, ici en forme de calottes sphériques, séparées par des zones compressées 22, la plaque 2 est aussi généralement plane et peut servir quasi directement, après seulement un détourage permettant d'approprier le contour de la pièce, d'assise de siège par exemple. On notera dés maintenant que un léger galbe peut être conféré au produit soit par la forme du moule, soit après démoulage, mais dans ce cas la mise en forme possible reste limitée du fait de la rigidité d'ensemble du produit.

De manière générale, les zones peu denses peuvent être par exemple réparties, régulièrement ou non, sur toute la surface du produit ou au moins sur une partie de cette surface, et séparées par un quadrillage de bandes compressées. Le motif résultant est alors un quadrillage de matière dense, de faible épaisseur, dans lequel des zones de plus forte épaisseur et de densité relativement plus faible constituent une sorte de plots de rembourrage, tels une pluralité de petits coussins juxtaposés et séparés les uns des autres par des bandes compressées et minces. On notera encore, comme on le voit aux figures 9 et 10 notamment, que la forme, la disposition et la répartition des zones non compressées peuvent être très diverses, et en tous cas nullement limitées par les exemples de produits montrés dans les dessins.

De tels produits peuvent trouver leur utilité pour constituer des pièces de calage, des parois ou panneaux d'assise ou de dossier de siège, etc. Dans de telles applications, la fonction des zones non-compressées est essentiellement mécanique pour apporter une capacité de déformation par écrasement, et donc d'amortissement. Ces zones peuvent aussi apporter une capacité d'isolation thermique ou phonique, du fait de leur faible densité.

Comme illustré figures 7 et 8, dans un produit 3 sous forme d'une équerre, les zones peu compressées 31, et les zones compressées éventuellement, peuvent aussi s'étendre en longueur. Une telle zone peu dense 31 s'étendant en ligne droite ou incurvée sur une longueur prédéterminée du produit 3 constitue alors une zone apte à se déformer par pliage, comme on le voit bien figure 8, c'est-à-dire formant une sorte de charnière entre deux zones compressées 32 situées de part et d'autre de la zone peu dense longitudinale 31.

Les zones peu denses peuvent aussi former une simple bande de faible largeur, servant de ligne de prédécoupe. Ainsi, par exemple dans le produit représenté figures 9 et 10, les zones non compressées 54, 55 sont des bandes étroites, semi rigides, qui, comme on le verra par la suite, servent de ligne de pliage, dans les parties 54 et 55a, et de lignes de prédécoupe dans les parties 55b.

La mise en oeuvre de l'invention va être décrite maintenant en relation avec les figures 13 à 15 qui illustrent un exemple de moule, destiné à la fabrication de pièces constitutives du siège 4 de la figure 12, telles que les pièces 40 illustrées figures 9 et 10, et en relation avec les figures 3 à 6 illustrant le principe du procédé.

Le moule 6, représenté en position fermée sur les figures 13 et 14 et en position ouverte avec demi-moule supérieur retourné à la figure 15, est constitué, de manière classique pour la réalisation de produits à base de mat fibreux thermo-compressé, de demi-moules 61, 62 qui comportent chacun une paroi interne 63 dans laquelle est réalisée l'empreinte 64 de la pièce à réaliser. Le moule comporte par ailleurs des moyens classiques, non représentés, pour presser les deux demi moules l'un vers l'autre.

De manière spécifique à l'invention, les parois 63 du moule comportent des zones dégagées 65, 66, traversant complètement la paroi, correspondant respectivement aux zones 51 d'une part et 54, 55 d'autre part, de la pièce 40. Certaines de ces zones pourraient aussi être seulement en retrait par rapport à l'empreinte, sans traverser complètement la paroi.

Chaque demi moule est équipé de cartouches chauffantes électriques disposées dans des rainures 67 ménagées dans les parois du moule, du côté opposé à l'empreinte, comme on le voit schématiquement représenté figure 14, ou un capot de protection extérieur 68 a été enlevé. Les cartouches chauffantes, ou autres moyens de chauffage équivalents, ont une puissance suffisante pour monter la paroi du moule du côté de l'empreinte à une température de 160°C à 220°C. Dans la pratique, ces cartouches sont disposées de manière que les parties du moule correspondant aux zones du produit souhaitées les plus rigides sont plus chauffées que les parties correspondant aux zones souhaitées semi-rigides ou restant brutes.

Par ailleurs, les demi moules 61, 62 comportent aussi des moyens de refroidissement, non représentées sur les figures 13 et 14, préférentiellement constituées de canaux 71 forés dans les parois 63 du moule et dans lesquels circule un fluide caloporteur, et disposés de manière alternée avec les cartouches chauffantes 72, comme on le verra figures 4et 5 par exemple, de manière à pouvoir contrôler les phases et les zones de chauffage et de refroidissement. De plus et principalement, les canaux de refroidissement 71 sont positionnés au plus près des parties du moule correspondant aux zones que l'on souhaite brutes ou semi-rigides à la fin du procédé de transformation.

On notera encore que les moules peuvent intégrer les outils de découpe nécessaires au détourage des produits fabriqués ou à toutes autres découpes souhaitées.

Les opérations de réalisation d'une pièce au moyen d'un tel moule se déroulent de manière similaire à un moulage de type connu. Typiquement, les non-tissés utilisés sont des non-tissés de polypropylène et de fibres de lin, en proportion sensiblement égales en poids, et avec une densité comprise entre 1600 et 3500 g/m².

Le moule est placé sur une machine de compression classique dont les plateaux ont une dimension suffisante pour accueillir l'outillage. Le mat fibreux est déposé entre les deux demi moules 61, 62 puis comprimé à des pressions comprises entre 5 et 30 bars, pendant un temps compris entre 30 secondes et 420 secondes, au cous duquel les fibres synthétiques de thermoplastique au contact des parois chaudes du moules fondent pour s'agglomérer.

Puis l'alimentation des résistances chauffantes est coupée et une phase de refroidissement est engagée. Cette phase de refroidissement est très importante pour le démoulage ultérieur de la pièce. Le temps de refroidissement dépend des caractéristiques du moule et du produit moulé, mais il est préférable de n'ouvrir le moule que lorsque sa température est inférieure à la température de ramollissement de la fibre thermoplastique utilisée dans le non-tissé. Par exemple, dans un cas d'utilisation de non-tissé de fibres synthétiques de polypropylène et de fibres naturelles de lin, la phase de chauffage était d'environ 400 secondes et la température de démoulage est inférieure ou égale à 150°C.

Le principe du procédé selon l'invention, appelé « compression partielle », va être décrit maintenant en relation avec les schémas des figures 3 à 6.

L'obtention de parties denses, de forte rigidité, telles que les parties 12, 22, 41, 43, 52, est schématiquement illustrée figure 3. Elle est réalisée par apport de chaleur à partir des parois 63 du moule et compression entre les dites parois dans les zones de l'empreinte 64 autres que les zones dégagées 65, 66. La réalisation de ces zones denses est donc similaire à la technique antérieure.

Des zones brutes, souples, telles que les zones 11, 21, 51, sont obtenues au niveau des parties dégagées 65 du moule, comme illustré figure 4. Ces partie dégagées, par exemple débouchantes à travers la paroi 63, ne compressent pas le mat de non-tissé et ne lui apportent pas ou peu de chaleur, de sorte que l'état de la zone peu dense 11 reste sensiblement brut, proche de l'état de base du mat de non-tissé. On notera incidemment que, sur la figure 4, l'épaisseur de la partie 11 est approximativement le double de celle de la partie 12 compressée, mais, en fonction notamment de l'étendue de la zone non compressée, son épaisseur peut rester nettement plus importante. Ainsi, par exemple, le mat de non-tissé a typiquement une épaisseur de 10 à 40 mm. Dans les zones thermo-compressées, cette épaisseur est réduite à une valeur de 2 à 5 mm, et dans les zones non compressées, l'épaisseur peut rester pratiquement celle d'origine, donc jusqu'à 40 mm, dès lors que la zone non compressée est suffisamment grande pour que l'effet de la chaleur de la paroi du moule ne se fasse pas sensiblement sentir au niveau de ladite zone non-compressée. Pour réduire l'apport calorifique par rayonnement des parois 63 au niveau des parties dégagées, les bords des parties dégagées sont préférentiellement formés en biseau 63a, d'angle encore préférentiellement inférieur ou égal à 60°. Egalement, on pourra disposer des canaux de refroidissement 71 à proximité directe de ces parties dégagées pour compenser un excès de chaleur susceptible de provenir des parois chauffée par les résistances 72.

Des zones semi rigides, telles que les zones linéaires 54 ou 55, sont obtenues au niveau de parties 66 du moule dégagées mais non débouchantes, comme illustré schématiquement figure 5, qui permettent de ne pas compresser le mat mais qui assurent par contre un apport de chaleur par conduction thermique dans la partie 63 a de paroi 63 du moule se trouvant au niveau des dites parties 66. On notera incidemment que les parties dégagées mais non débouchantes ont une largeur limite inférieure, nécessaire pour avoir une partie semi-rigide exploitable, pour obtenir un effet de charnière par exemple. En dessous de cette largeur limite, de l'ordre de 2 mm par exemple, l'apport calorifique par convection et/ou radiation serait tel que les fibres peuvent fondre dans toute l'épaisseur du non tissé, qui devient alors rigide après démoulage du produit.

Il est également possible de réaliser, comme illustré figure 6, une zone 81, localisée entre deux zones compressées 82, ayant des propriétés, notamment de dureté, variant dans l'épaisseur du produit. Cette zone 81 présente d'un côté une surface 81a rigide, accolée d'une partie molle 81b de non-tissé restant sensiblement à l'état brut. La surface rigide 81a est obtenue suite à la fusion des fibres synthétiques au contact de la paroi chauffée 63a du moule, continue au niveau de la zone 81, ce contact étant favorisé par la compression exercée de chaque côté de la dite zone 81. La partie plus molle 81b résultant, comme dans le cas de la figure 4, de la partie débouchante 69 réalisée dans la paroi opposée 63b.

Un exemple d'application de l'invention est illustré figures 9 à 12. Cet exemple porte sur la réalisation d'un siège, représenté figure 12, formé de deux parties 4a, 4b sensiblement identiques, obtenues comme décrit précédemment par la mise en oeuvre du procédé selon l'invention, en utilisant le moule des figures 13 à 15. Chaque partie est donc une pièce telle que la pièce 40 de la figure 10, obtenue après détourage du produit montré figure 9. On notera que, lors du moulage, des oreilles ou pattes d'accrochages 45 sont formées sur les bords latéraux de la partie centrale 41.

Une pièce 40 forme la partie 4a qui constitue une paroi avant 41a du siège et l'assise 42a. Une autre pièce 40 forme la paroi arrière 41b du siège et le dossier 42b.

Pour constituer le siège, les zones semi-rigides 55b des pièces 4a, 4b sont découpées puis les parties 43a, 43b de chacune des pièces 4a, 4b sont pliées comme on le voit figure 11, selon les lignes 55a formées aussi de zones semi-rigides. Du fait de la courbure des dites lignes 55a, les parties 43a, 43b, ainsi que les parties 41a, 41b se trouvent cintrées par déformation élastique des zones rigides qui les constituent. Simultanément, du fait des découpes selon les lignes 55b, les pattes 44 se trouvent formées, car désolidarisées des parties 43, et la légère courbure qui leur est conférée par le cintrage des parties 41a, 41b, assure leur rigidité.

Puis l'assise est formée, de manière similaire, par pliage de la partie 42 a selon la ligne courbe constituée par la zone semi-rigide 54. La aussi, du fait de la courbure de cette ligne, l'assise se trouve cintrée comme on le voit bien figure 12.

Le siège est ensuite définitivement formé par l'assemblage des deux pièces 4a et 4b ainsi mises en forme et mises face à face comme illustré figure 11, au moyen des pattes ou oreilles 45 dont la forme est prédéterminée pour assurer un ancrage et un verrouillage des dites pattes et oreilles entre elles. On obtient ainsi le siège représenté figure 12 dont le dossier et l'assise présentent un aspect visuel particulier en plus du confort procuré par la présence des zones peu denses 51 réparties sur leur surface. La stabilité du siège est assurée par les extrémités inférieures des bords des parties 41a, 41b, qui constituent des pattes latérales 46, auxquelles s'ajoutent une patte 44 avant et une patte 44 arrière.

Un autre exemple d'application du produit selon l'invention est constitué par un emballage de protection 9, tel que par exemple une boite à oeufs, représenté figure 16. Dans cet exemple, on exploite particulièrement le mode de mise en oeuvre de l'invention consistant à réaliser des zones de dureté variable dans l'épaisseur, comme décrit en relation avec la figure 6. L'emballage 9 est constitué de deux parties 91 sensiblement identiques assemblées par une zone de charnière 92. La zone de charnière est une zone semi-rigide obtenue de manière similaire à la zone 54 de la figure 5. Les deux parties 91 sont obtenues de manière similaire à la zone 81 de la figure 6, et présentent chacune une face dure 93 formant la paroi extérieure de l'emballage et une face molle 94, de non-tissé non-transformé, dans lequel des empreintes 95 de maintien des objets à protéger des chocs peuvent être préformées.

L'invention n'est pas limitée aux non-tissés évoqués précédemment à titre d'exemple, ni aux produits ou à leurs applications, décrits ci-dessus. Outre la réalisation de produits d'ameublement, l'invention peut aussi s'appliquer par exemple pour la fabrication de parements acoustiques intérieurs, d'emballages protecteurs divers. Ces diverses pièces dont la fabrication selon les techniques antérieures nécessite l'assemblage de produits multicouches, peuvent grâce à l'invention être obtenus en une seule étape de transformation et avec l'utilisation d'une seule couche de non-tissé de thermoplastique ou composite thermoplastique et fibres naturelles. On peut aussi ajouter une couche d'aspect du type voilage sur le non-tissé avant transformation.

## Revendications

1. Produit plat à base de mat de fibres et de matière synthétique thermoplastique, comportant notamment une ou des parties rigides ou semi rigides et constitué d'un mélange non-tissé et sensiblement homogène de fibres et de ladite matière synthétique thermoplastique, le produit étant obtenu à la suite notamment d'une thermo-compression dudit mélange, **caractérisé en ce qu'**il présente sur sa surface des zones denses (12, 22, 41, 43, 52) résultant de ladite compression et constituant la ou les dites parties rigides ou semi rigides, et des zones (11, 21, 31, 51, 54, 55, 81) non-compressées ou de compression moindre, constituant des zones de plus faible densité et/ou de plus grande souplesse, situées entre les dites zones denses.

2. Produit selon la revendication 1, **caractérisé en ce qu'**au moins une zone non-compressée (31, 54, 55) s'étend en longueur, de manière à constituer une zone apte à se déformer par pliage.

3. Produit selon la revendication 1, **caractérisé en ce qu'**au moins une zone non-compressée (55b) s'étend en longueur et sur une faible largeur, de manière à constituer une zone apte à être rompue ou coupée.

4. Produit selon la revendication 1, **caractérisé en ce que** des zones peu ou non compressées (11, 51) sont réparties sur au moins une partie de la surface du produit, et séparées par un quadrillage de bandes compressées (12, 52).

5. Produit selon la revendication 1, **caractérisé en ce qu'**il comporte des zones (81) où le mat est dense seulement sur une face du produit.

6. Procédé d'obtention d'un produit plat à base de mat de fibres et de matière synthétique thermoplastique tel que défini dans l'une quelconque des revendications 1 à 5, selon lequel on soumet le mat à une thermo-compression, **caractérisé par le fait que** la compression du mat est réalisée seulement localement, de manière à former un produit dense dans les zones (12, 22, 41, 43, 52) soumise à ladite compression et à laisser subsister entre celles-ci des zones (11, 21, 31, 51, 54, 55, 81) peu denses, non compressées.

7. Procédé selon la revendication 6, **caractérisé en ce que**, entre des zones denses (12), le mat de non-tissé est localement chauffé seulement sur une de ses faces (81a).

8. Moule pour la mise en oeuvre du procédé selon la revendication 6, **caractérisé en ce qu'**il comporte des parois (63) opposées en vis-à-vis, pourvues de moyens de chauffage (72), et au moins une paroi comportant des zones (65, 66) dégagées ou en retrait.

9. Moule selon la revendication 8, **caractérisé en ce que** les parois (63) du moule sont équipées de moyens de refroidissement localisé (71).

10. Moule selon la revendication 9, **caractérisé en ce que** les moyens de chauffage sont des résistances chauffantes électriques (72) disposées dans l'épaisseur des parois (63) du moule, et les moyens de refroidissement sont des canaux (71) aménagés dans les parois du moule dans lesquels circule un fluide refroidissant.

11. Application du produit selon la revendication 1 à la réalisation de pièces (1, 2, 4a, 4b) pourvues de zones en surépaisseur (11, 21, 51) formant des coussinets amortissants, insonorisant ou isolants.

12. Application du produit selon la revendication 2 à la réalisation de pièces tridimensionnelles (3 ; 4a, 4b) comportant des zones rigides (32 ; 41, 43, 41a, 42a) reliées par un pli (31, 54, 55).

13. Application du produit selon la revendication 5 à la réalisation d'objet (9) présentant des caractéristiques physiques et mécaniques variables dans leur épaisseur.
